# FASCICULE DE BREVET EUROPEEN

(11) **EP 0 939 694 B1**
(45) Date de publication et mention de la délivrance du brevet: **26.04.2000**
(21) Numéro de dépôt: 97943924.7
(22) Date de dépôt: 02.10.1997
(51) Int. Cl.: B29C 47/66, B30B 11/24, B23B 35/00

(54) **FOURREAU DE MACHINE D'EXTRUSION**
SCHUTZHÜLLE FÜR EXTRUSIONSMASCHINE
SHEATH FOR EXTRUDER

(30) Priorité: 21.11.1996 FR 9614240
(43) Date de publication de la demande: 08.09.1999
(73) Titulaire: CLEXTRAL, F-92400 Courbevoie (FR)
(72) Inventeur: BRUYAS, Laurent, F-43330 Pont Salomon (FR); CHENEVIER, Daniel, F-42170 Saint Just Saint Rambert (FR); MAISONNY, Serge, F-43110 Aures-sur-Loire (FR)
(74) Mandataire: Lanceplaine, Jean-Claude
(86) Numéro de dépôt international: FR9701742
(87) Numéro de publication internationale: WO9822274

(56) Documents cités:
- EP-A- 0 348 381
- DE-C- 319 489
- PATENT ABSTRACTS OF JAPAN vol. 9, no. 303 (M-434) [2026] , 30 novembre 1985 & JP 60 141411 A (HITACHI KASEI), 26 juillet 1985,

## Description

La présente invention a pour objet un fourreau de machine d'extrusion.

La présente invention a également pour objet une chemise de fourreau de machine d'extrusion.

L'invention s'applique spécialement aux extrudeuses à au moins deux vis, et plus généralement aux machines d'extrusion dans lesquelles on introduit des effets de mélange, de malaxage, de trituration, de réaction, de fibration, de cuisson et notamment de cisaillement par passage dans le fourreau d'une matière entraînée par la rotation des vis.

D'une manière générale, une machine d'extrusion comprend un fourreau de forme allongée et muni d'un alésage s'étendant sur toute la longueur dudit fourreau et dans lequel est disposée une chemise enveloppant les vis.

Dans le cas où la machine d'extrusion comprend deux vis à axes parallèles, la chemise comporte deux alésages cylindriques à axes parallèles dans lesquels sont placées les vis, celles-ci s'engrenant ou non l'une dans l'autre.

Les vis sont munies sur leur périphérie, notamment de filets en hélice qui entraînent en aval la matière introduite par une extrémité amont du fourreau.

La matière est ainsi entraînée jusqu'à l'extrémité avale du fourreau qui peut être munie d'une filière d'extrusion ou bien d'un simple orifice de sortie dans le cas où la matière ne doit pas être soumise à une extrusion.

Pour faire varier le traitement à réaliser au cours de l'avancement de la matière dans le fourreau, les vis sont généralement constituées de zones successives ayant des filets de formes ou de pas de différents ou comportant des organes de traitement particulier.

Jusqu'à présent, l'alésage du fourreau est obtenu en effectuant deux perçages sécants qui forment au niveau de leur intersection deux arêtes longitudinales et en usinant ces arêtes longitudinales pour obtenir une surface plane entre les deux perçages afin de réaliser un alésage formé de deux demi-lobes reliés entre eux par des portions planes.

Cette technique nécessite donc plusieurs outils d'usinage et notamment une aléseuse pour réaliser les perçages et une fraiseuse pour réaliser les surfaces planes.

De plus, il est nécessaire d'utiliser lors de l'étape de rectification de l'alésage du fourreau des outils spécifiques de formes particulières étant donné que cet alésage est formé par une succession de portions courbes et de portions planes.

Ces différentes opérations et le changement d'outils pour chacune de ces opérations augmentent d'une manière significative le prix de revient du fourreau et le temps d'usinage de l'alésage du fourreau.

L'invention a pour but d'éviter ces inconvénients en proposant un fourreau de machine d'extrusion dont l'usinage est facilité et qui permet de diminuer le temps de fabrication.

L'invention a pour objet un fourreau de machine d'extrusion comportant un alésage destiné à recevoir une chemise dans laquelle sont entraînées en rotation au moins deux vis à axes parallèles, caractérisé en ce que l'alésage est formé de trois lobes.

Selon d'autres caractéristiques de l'invention :
- les lobes de l'alésage sont formés par trois perçages sécants dont les axes sont parallèles entre eux et situés dans le même plan que l'axe principal du fourreau, l'axe d'un desdits perçages étant situé sur ledit axe principal et les axes des deux autres perçages étant situés de part et d'autre et équidistants de cet axe principal,
- le premier perçage est réalisé sur l'axe principal du fourreau et le second perçage et le troisième perçage sont réalisés de chaque côté de ce premier perçage et sécants audit premier perçage, les diamètres de ces perçages étant sensiblement égaux,
- le premier perçage est réalisé d'un côté et à une distance déterminée de l'axe principal du fourreau et le second perçage est réalisé de l'autre côté dudit axe principal et à la même distance de l'axe principal dudit fourreau et le troisième perçage est réalisé sur cet axe principal, lesdits perçages étant sécants et les diamètres de ces perçages étant sensiblement égaux,
- les axes des perçages disposés de part et d'autre du perçage situé sur l'axe principal du fourreau sont situés à l'intérieur de la circonférence délimitée par le perçage disposé sur ledit axe principal,
- les axes des perçages disposés de part et d'autre du perçage situés sur l'axe principal du fourreau sont situés sur la circonférence délimitée par le perçage disposé sur ledit axe principal,
- les axes des perçages disposés de part et d'autre du perçage disposés sur l'axe principal du fourreau sont situés à l'extérieur de la circonférence délimitée par le perçage disposé sur ledit axe principal,
- les perçages sont réalisés au moyen d'une aléseuse ou d'une foreuse.

L'invention a également pour objet une chemise de fourreau de machine d'extrusion, dans laquelle sont entraînées en rotation au moins deux vis à axes parallèles, caractérisée en ce que sa face extérieure est formée par trois lobes et en ce qu'elle comporte deux alésages sécants, à axes parallèles.

D'autres caractéristiques et avantages de l'invention apparaîtront au cours de la description qui va suivre, faite en référence aux dessins annexés, sur lesquels :
- la Fig. 1 est une vue schématique en perspective d'un tronçon conforme à l'invention,
- les Figs. 2 à 4 sont des vues en coupe transversale montrant les différentes étapes d'un premier mode d'usinage de l'alésage à l'intérieur du fourreau,
- les Figs. 5 à 7 sont des vues en coupe transversale montrant les différentes étapes d'un second mode d'usinage de l'alésage à l'intérieur du fourreau.

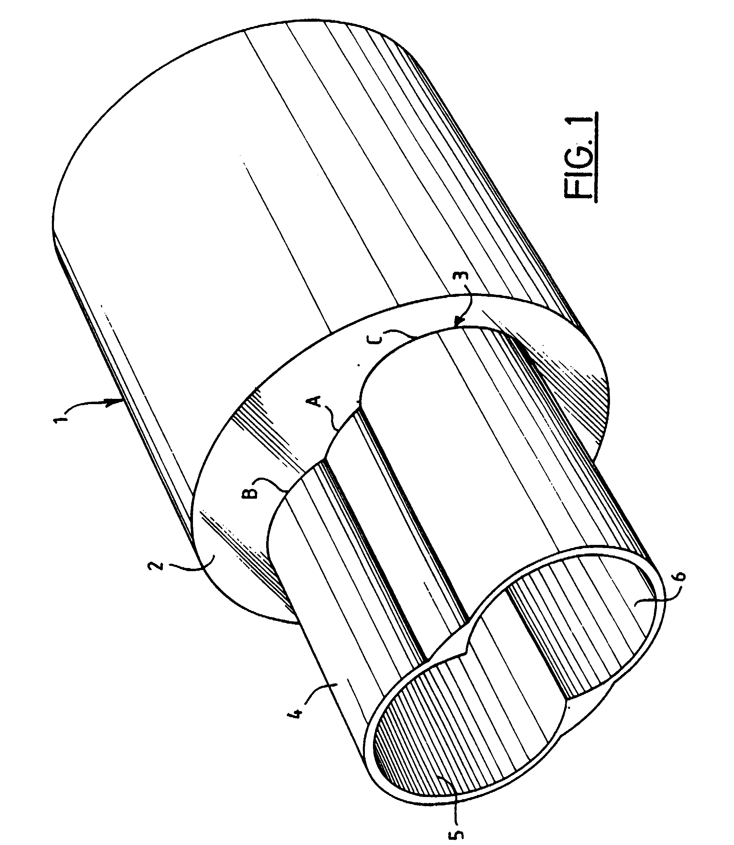

A la Fig. 1, on a représenté schématiquement un tronçon d'un fourreau 1 d'une machine d'extrusion à deux vis à axes parallèles et dans laquelle on produit des effets de mélange, de malaxage, de trituration, de réaction, de fibration, de cuisson et notamment de cisaillement par passage dans ce fourreau 1 d'une matière entraînée par rotation des vis.

Le fourreau 1 est de forme allongée et de section extérieure quelconque, comme par exemple circulaire, ovale, carrée ou rectangulaire.

Ce fourreau 1 se compose d'un corps massif 2 comportant un alésage 3 s'étendant sur toute la longueur du fourreau 1 et destiné à recevoir une chemise 4 qui est munie de deux alésages 5 et 6 sécants, à axes parallèles dans lesquels sont placées deux vis non représentées.

De manière classique, les vis sont constituées de zones successives ayant des filets de forme ou de pas différents ou comportant des organes de traitement particulier.

Ces vis entraînent vers l'aval la matière introduite par une extrémité amont du fourreau 1.

Ainsi que représenté à la Fig. 1, l'alésage 3 ménagé à l'intérieur du fourreau 1 est formé par trois lobes, respectivement A, B, C.

La chemise 4 possède un profil extérieur correspondant au profil de l'alésage 3.

Ainsi, la chemise 4 présente une face extérieure formée par trois lobes.

D'une manière générale, le procédé d'usinage de l'alésage 3 dans le fourreau 1 consiste à réaliser successivement trois perçages sécants dont les axes sont parallèles entre eux et situés dans le même plan que l'axe principal du fourreau 1, l'axe d'un desdits perçages étant situé sur ledit axe principal et les axes des deux autres perçages étant situés de part et d'autre et équidistants de cet axe principal, et à effectuer une opération de rectification de ces perçages.

En se reportant maintenant aux Figs. 2 à 4, on va décrire un premier mode d'usinage de l'alésage 3 du fourreau.

Tout d'abord et comme représenté à la Fig. 2, on réalise un premier perçage 10 dont l'axe a est situé sur l'axe principal du fourreau 1.

Ensuite et comme représenté à la Fig. 3, on réalise d'un côté du premier perçage 10, un second perçage 11 sécant audit premier perçage 10 et de diamètre sensiblement égal au diamètre de ce premier perçage 10.

L'axe b du second perçage 11 est parallèle à l'axe a du premier perçage 10.

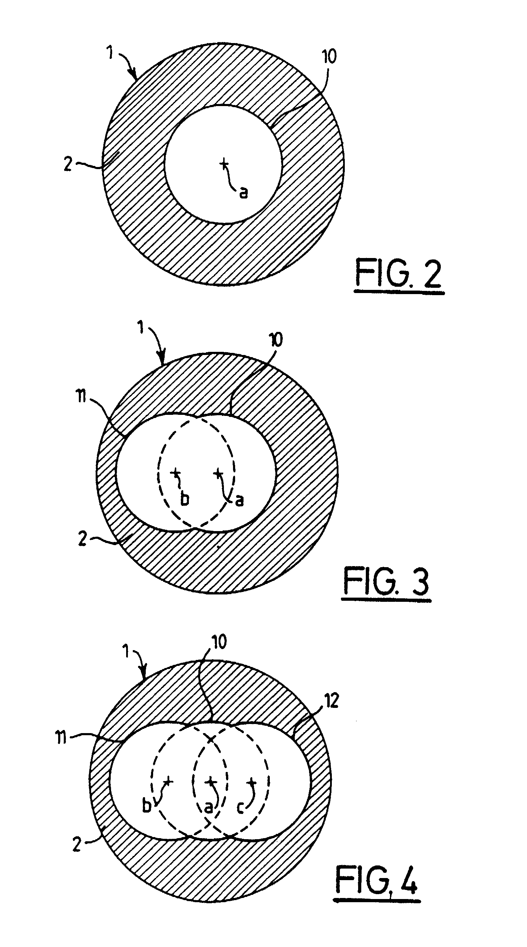

Enfin et comme représenté à la Fig. 4, on réalise de l'autre côté du premier perçage 10 par rapport au second perçage 11, un troisième perçage 12 sécant audit premier perçage 10 et de diamètre sensiblement égal aux diamètres du premier perçage 10 et du second perçage 11.

L'axe c du troisième perçage 12 est parallèle aux axes a et b, respectivement du premier perçage 10 et du second perçage 11.

Les axes a, b et c, des perçages 10, 11 et 12 sont situés dans un même plan.

Par ailleurs, les axes b et c, respectivement des second 11 et du troisième perçages 12 sont équidistants de l'axe a du premier perçage 10.

Selon un premier mode de réalisation représenté à la Fig. 4, les axes b et c, respectivement du second perçage 11 et du troisième perçage 12 sont situés à l'intérieur de la circonférence délimitée par le premier perçage 10.

Selon deux autres variantes, les axes b et c, respectivement du second perçage 11 et du troisième perçage 12, peuvent être situés sur la circonférence délimitée par le premier perçage 10 ou à l'extérieur de cette circonférence.

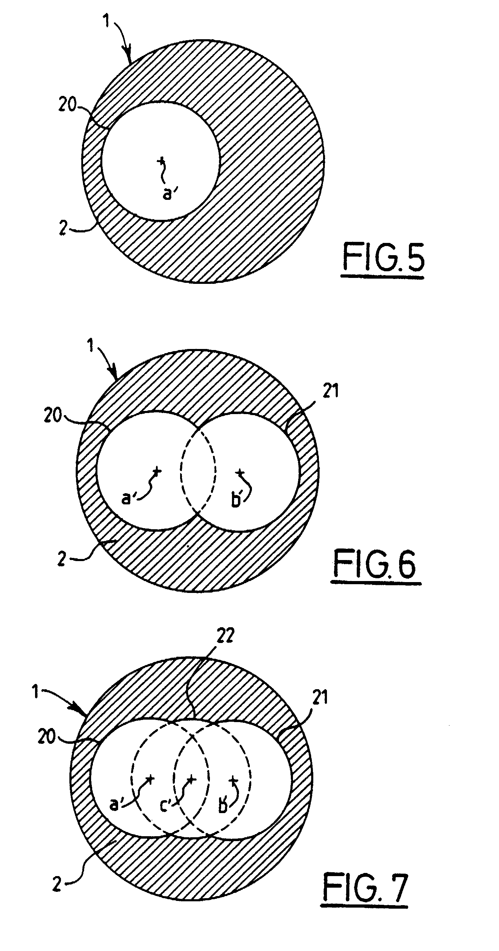

En se reportant aux figures 5 à 7, on va décrire un second mode d'usinage de l'alésage 3 du fourreau 1.

Dans ce cas et comme représenté à la Fig. 5, on réalise un premier perçage 20 d'un côté et à une distance déterminée de l'axe principal du fourreau 1.

L'axe a' de ce premier perçage 20 est parallèle à l'axe principal du fourreau 1.

Ensuite et comme représenté à la Fig. 6, on réalise un second perçage 21 de l'autre côté et à la même distance de l'axe principal du fourreau 1 par rapport au premier perçage 20.

Le second perçage 21 est sécant au premier perçage 20 et l'axe b' de ce second perçage 21 est parallèle à l'axe a' du premier perçage 20 ainsi qu'à l'axe principal du fourreau 1.

Enfin et comme représenté à la Fig. 7, on réalise sur l'axe principal du fourreau 1 un troisième perçage 22, l'axe c' de ce troisième perçage 22 étant parallèle aux axes a' et b', respectivement du premier perçage 20 et du second perçage 21.

Les axes a', b' et c' des perçages 20, 21 et 22 sont situés dans un même plan et les diamètres desdits perçages 20, 21 et 22 sont sensiblement égaux.

Selon un premier mode de réalisation représenté sur la Fig. 7, les axes a' et b', respectivement du premier perçage 20 et du second perçage 21, sont situés à l'intérieur de la circonférence délimitée par le troisième perçage 22.

Selon deux autres variantes, les axes a' et b', respectivement du premier perçage 20 et du second perçage 21, peuvent être situés sur la circonférence délimitée par le troisième perçage 22 ou à l'extérieur de cette circonférence.

Les perçages 10, 11, 12 et 20, 21, 22 sont réalisés uniquement au moyen d'un outil, par exemple du type aléseuse ou foreuse, couramment utilisé dans le domaine de l'usinage.

Ces perçages 10, 11, 12 et 20, 21, 22 forment les trois lobes A, B et C de l'alésage 3 du fourreau 1.

Après la réalisation des perçages 10, 11 et 12 ou 20, 21 et 22, on réalise une étape de rectification au moyen d'un outil de forme classique couramment mis en oeuvre dans le cadre de la rectification d'un alésage cylindrique.

Le profil extérieur de la chemise 4 est réalisé par exemple au moyen d'une rectifieuse couramment utilisée dans le domaine de l'usinage.

Avec un tel fourreau le nombre d'opérations pour réaliser l'alésage est diminué et, de ce fait, le temps d'usinage et cet usinage ne met en oeuvre que des outils couramment utilisés, permettant ainsi de réduire le coût de fabrication du fourreau.

## Revendications

1. Fourreau de machine d'extrusion comportant un alésage (3) destiné à recevoir une chemise (4) dans laquelle sont entraînées en rotation au moins deux vis à axe parallèles, caractérisé en ce que l'alésage (3) est formé par trois lobes.

2. Fourreau selon la revendication 1, caractérisé en ce que les lobes de l'alésage (3) sont formés par trois perçages sécants (10, 11, 12 ; 20, 21, 22) dont les axes sont parallèles entre eux et situés dans le même plan que l'axe principal du fourreau (1), l'axe d'un (10 ; 22) desdits perçages étant situé sur ledit axe principal et les axes des deux autres perçages (11, 12 ; 20, 21) étant situés de part et d'autre et équidistants de cet axe principal.

3. Fourreau selon la revendication 2, caractérisé en ce que le premier perçage (10) est réalisé sur l'axe principal du fourreau (1) et le second perçage (11) et le troisième perçage (12) sont réalisés de chaque côté de ce premier perçage (10) et sécants audit premier perçage (10), les diamètres de ces perçages (10, 11, 12) étant sensiblement égaux.

4. Fourreau selon la revendication (1), caractérisé en ce que le premier perçage (20) est réalisé d'un côté et à une distance déterminée de l'axe principal du fourreau (1) et le second perçage (21) est réalisé de l'autre côté dudit axe principal et à la même distance de l'axe principal dudit fourreau (1) et le troisième perçage (22) est réalisé sur cet axe principal, lesdits perçages (20, 21, 22) étant sécants et les diamètres de ces perçages (20, 21, 22) étant sensiblement égaux.

5. Fourreau selon l'une quelconque des revendications 2 à 3, caractérisé en ce que les axes des perçages (11, 12 ; 20, 21) disposés de part et d'autre du perçage (10; 22) situé sur l'axe principal du fourreau (1) sont situés à l'intérieur de la circonférence délimitée par le perçage (10 ; 22) disposé sur ledit axe principal.

6. Fourreau selon l'une quelconque des revendications 2 à 4, caractérisé en ce que les axes des perçages (11, 12 ; 20, 21) disposés de part et d'autre du perçage (10; 22) situés sur l'axe principal du fourreau (1) sont situés sur la circonférence délimitée par le perçage (10 ; 22) disposé sur ledit axe principal.

7. Fourreau selon l'une quelconque des revendications 2 à 4, caractérisé en ce que les axes des perçages (11 ,12 ; 20, 21) disposés de part et d'autre du perçage (10; 22) disposés sur l'axe principal du fourreau (1) sont situés à l'extérieur de la circonférence délimitée par le perçage (10 ; 22) disposé sur ledit axe principal.

8. Fourreau selon l'une quelconque des revendications 2 à 7, caractérisé en ce que les perçages (10, 11, 12 ; 20, 21, 22) sont réalisés au moyen d'une aléseuse.

9. Fourreau selon l'une quelconque des revendications 2 à 7, caractérisé en ce que les perçages (10, 11, 12; 20, 21, 22) sont réalisés au moyen d'une foreuse.

10. Chemise de fourreau de machine d'extrusion, dans laquelle sont entraînées en rotation au moins deux vis à axes parallèles, caractérisée en ce que sa face extérieure est formée par trois lobes et en ce qu'elle comporte deux alésages sécants, à axes parallèles

## Patentansprüche

1. Extrudergehäuse mit einer Bohrung (3) zur Aufnahme eines Einsatzes (4), in dem mindestens zwei Schnecken mit parallelen Achsen drehangetrieben werden, dadurch gekennzeichnet, dass die Bohrung (3) aus drei kreissegmentförmigen Ausschnitten geformt ist.

2. Gehäuse nach Anspruch 1, dadurch gekennzeichnet, dass die Ausschnitte der Bohrung (3) von drei sich überschneidenden Bohrungen (10, 11, 12; 20, 21, 22) gebildet werden, deren Achsen zueinander parallel sind und in der gleichen Ebene liegen wie die Hauptachse des Gehäuses (1), wobei die Achse einer dieser Bohrungen (10; 22) in der Hauptachse und die Achsen der beiden anderen Bohrungen (11, 12; 20, 21) zu beiden Seiten und in gleichem Abstand von dieser Hauptachse liegen.

3. Gehäuse nach Anspruch 2, dadurch gekennzeichnet, dass die erste Bohrung (10) in der Hauptachse des Gehäuses (1) und die zweite Bohrung (11) sowie die dritte Bohrung (12) auf beiden Seiten der ersten Bohrung (10) und als Sekanten zu derselben angebracht sind, wobei die Durchmesser der Bohrungen (10, 11, 12) im wesentlichen gleich sind.

4. Gehäuse nach Anspruch 1, dadurch gekennzeichnet, dass die erste Bohrung (20) auf einer Seite und in einem bestimmten Abstand zur Hauptachse des Gehäuses (1) und die zweite Bohrung (21) auf der anderen Seite der Hauptachse und mit dem gleichen Abstand zur Hauptachse des Gehäuses (1) und die dritte Bohrung (22) in dieser Hauptachse angebracht sind, wobei die Bohrungen (20, 21, 22) Sekanten sind und im wesentlichen gleiche Durchmesser haben.

5. Gehäuse nach Anspruch 2 oder 3, dadurch gekennzeichnet, dass sich die Achsen der Bohrungen (11, 12; 20, 21), die zu beiden Seiten der Bohrung (10; 22) in der Hauptachse des Gehäuses (1) angebracht sind, innerhalb des Umfangs befinden, der von der Bohrung (10; 22) in der Hauptachse festgelegt ist.

6. Gehäuse nach einem der Ansprüche 2 bis 4, dadurch gekennzeichnet, dass die Achsen der zu beiden Seiten der Bohrung (10; 22) in der Hauptachse des Gehäuses (1) angebrachten Bohrungen (11, 12; 20; 21) auf dem Umfang liegen, der von der Bohrung (10; 22) in der Hauptachse festgelegt ist.

7. Gehäuse nach einem der Ansprüche 2 bis 4, dadurch gekennzeichnet, dass die Achsen der zu beiden Seiten der Bohrung (10; 22) in der Hauptachse des Gehäuses (1) angebrachten Bohrungen (11, 12; 20, 21) außerhalb des Umfangs liegen, der von der Bohrung (10; 22) in der Hauptachse festgelegt ist.

8. Gehäuse nach einem der Ansprüche 2 bis 7, dadurch gekennzeichnet, dass die Bohrungen (10, 11, 12; 20, 21, 22) mittels eines Bohrgeräts ausgeführt sind.

9. Gehäuse nach einem der Ansprüche 2 bis 7, dadurch gekennzeichnet, dass die Bohrungen (10, 11, 12; 20, 21, 22) mittels einer Bohrmaschine ausgeführt sind.

10. Gehäuseeinsatz für einen Extruder, in dem mindestens zwei Schnecken mit parallelen Achsen drehangetrieben werden, dadurch gekennzeichnet, dass seine Außenseite von drei Ausschnitten gebildet wird und dass er zwei sich überschneidende Bohrungen mit parallelen Achsen aufweist.

## Claims

1. Cover for an extrusion-machine including a bore-hole (3) intended for a lining (4) in which there are driven in rotation at least two screws with parallel axes, characterized in that the bore-hole (3) is formed by three rounded sections.

2. Cover according to claim 1 characterized in that the rounded sections of the bore-hole (3) are formed by three intersecting perforations (10, 11, 12; 20, 21, 22) whose axes are mutually parallel and situated along the same plane, as the main axis of the cover (1), the axis of one (10; 22) of the said perforations being situated on the said main axis and the axes of the two other perforations (11; 12; 20, 21) being situated on both sides and equidistant from this main axis.

3. Cover according to claim 2, characterized in that the first perforation (10) is made along the main axis of the cover (1) and the second perforation (11) and the third perforation (12) are made on each side of this first perforation (10) and intersecting with the first perforation (10), the diameter of these perforations (10, 11, 12) being appreciably equal.

4. Cover according to claim 1, characterized in that the first perforation (20) is made on one side and at a fixed distance from the main axis of the cover (1) and the second perforation (21) is made on the other side of the said main axis and at the same distance from the main axis of the said cover (1) and the third perforation (22) is made along this main axis, which perforations (20. 21, 22) being intersecting and the diameters of these perforations (20, 21, 22) being appreciably equal.

5. Cover according to any one of the claims 2 to 3, characterized in that the axes of these perforations (11, 12; 20, 21) arranged on either side of the perforation (10; 22) placed along the main axis of the cover (1) are situated within the circumference delimited by the perforation (10; 22) arranged along the said main axis.

6. Cover according to any one of the claims 2 to 4, characterized in that the axes of the perforations (11, 12; 20, 21) arranged on either side of the perforation (10, 22) placed along the main axis of the cover (1) are situated on the circumference delimited by the perforation (10, 22) arranged along the said main axis.

7. Cover according to any one of the claims 2 to 4, characterized in that the axes of the perforations (11, 12; 20, 21) arranged on either side of the perforation (10, 22) placed along the main axis of the cover (1) are situated outside the circumference delimited by the perforation (10; 22) set along the said main axis.

8. Cover according to any of the claims 2 to 7, characterized in that the perforations (10, 11, 12; 20, 21, 22) are made by means of a boring machine.

9. Cover according to any one of the claims 2 to 7, characterized in that the perforations (10, 11, 12; 20, 21, 22) are made by means of a drilling machine.

10. Lining of the cover of an extrusion machine, in which are driven in rotation at least two screws with parallel axes, characterized in that its exterior face is formed by three rounded sections and in that they include two intersecting bore-holes with parallel axes.
